# FASCICULE DE BREVET EUROPEEN

(11) **EP 4 027 939 B1**
(45) Date de publication et mention de la délivrance du brevet: **12.07.2023**
(21) Numéro de dépôt: 20767820.2
(22) Date de dépôt: 09.09.2020
(51) Int. Cl.: A61D 19/00, A61D 19/02, A61D 99/00, A01N 1/02

(54) **ELÉMENT DE SUPPORT POUR UNE PLURALITÉ DE PAILLETTES DE CONDITIONNEMENT DE SEMENCE ANIMALE ET ENSEMBLE LE COMPORTANT**
TRÄGERELEMENT FÜR EINE MEHRHEIT VON TIERSAMENVERPACKUNGSHALMEN UND ANORDNUNG MIT DIESEM TRÄGERELEMENT
SUPPORT ELEMENT FOR A PLURALITY OF ANIMAL SEMEN PACKAGING STRAWS AND ASSEMBLY COMPRISING SAID SUPPORT ELEMENT

(30) Priorité: 09.09.2019 FR 1909908
(43) Date de publication de la demande: 20.07.2022
(73) Titulaire: IMV Technologies, 61300 Saint-Ouen-sur-Iton (FR)
(72) Inventeur: SCHMITT, Eric, 53700 VILLAINES-LA-JUHEL (FR); DOUESNEL, Jean-Louis, 27160 BRETEUIL-SUR-ITON (FR); GORGES, Jean-Charles, 72610 CHENAY (FR)
(74) Mandataire: Santarelli
(86) Numéro de dépôt international: PCT/EP2020/075225
(87) Numéro de publication internationale: WO 2021/048223

(56) Documents cités:
- JP-A- H05 285 163

## Description

### Domaine technique de l'invention

L'invention concerne la conservation de la semence animale.

### Etat de la technique

On sait que pour certaines espèces animales, notamment les bovins et les équins, on traite la semence après prélèvement en la diluant puis la semence diluée est subdivisée en doses remplissant chacune une paillette formée par un tube mince en matière plastique et par un bouchon engagé dans ce tube, la dose de semence étant disposée entre le bouchon et l'extrémité du tube la plus éloignée du bouchon, le tronçon d'extrémité correspondant étant obturé après remplissage par écrasement et soudage.

La conservation des doses de semence contenues dans les paillettes se fait par immersion des paillettes dans un bain d'azote liquide.

Avant cette immersion, les paillettes sont congelées en étant placées dans un congélateur où circule un flux de vapeur d'azote liquide.

En pratique, pour congeler les paillettes on en dispose une pluralité sur un rack appelé rampe de congélation puis la rampe de congélation portant les paillettes est introduite dans le congélateur. En général, le congélateur est dimensionné pour recevoir plusieurs rampes de congélation superposées.

On connait déjà une telle rampe de congélation du document JPH05285163A qui comporte deux parois dentées longeant un espace libre central, chaque paroi dentée présentant une denture à son sommet, les dentures des parois dentées étant identiques avec chaque creux délimité par une surface ayant une courbure selon le diamètre des paillettes.

Afin d'aider l'opérateur à disposer les paillettes sur la rampe de congélation, on connait déjà un élément de support, en général appelé calibre, qui comporte une platine et deux joues liées rigidement à la platine, laquelle a une largeur inférieure à la longueur des paillettes et comporte une surface cannelée présentant une pluralité de gorges semblables chacune orientée dans la direction de la largeur de la platine et chacune délimitée par une surface ayant une courbure selon le diamètre des paillettes, les gorges étant disposées côte à côte selon le même pas que les dentures de la rampe de congélation. L'élément de support et la rampe de congélation sont configurés pour que l'élément de support puisse s'insérer dans l'espace libre central de la rampe de congélation. Les joues sont configurées pour que l'élément de support puisse être placé sur une surface de réception horizontale avec la surface cannelée située en haut de la platine à un niveau prédéterminé au-dessus de la surface de réception. Chaque joue comporte une partie centrale ainsi qu'une première partie saillante et une seconde partie saillante s'étendant chacune d'un côté de la partie centrale, ces parties saillantes étant prévues pour recevoir la base de la rampe de congélation dont les dentures se trouvent alors sous la surface cannelée.

Dans cette position, l'opérateur place les paillettes en vrac sur la surface cannelée et les étale sur celle-ci pour que chaque paillette se loge dans une des gorges.

Comme la platine a une largeur inférieure à la longueur des paillettes, l'opérateur peut agencer les paillettes de sorte que chacune a un tronçon d'extrémité qui saille de ladite platine de chaque côté.

La rampe de congélation est alors soulevée et récupère les paillettes dont chacune présente alors de chaque côté un tronçon d'extrémité reçu dans un creux de l'une des dentures.

### Exposé de l'invention

L'invention vise à faciliter encore la mise en place des paillettes sur la rampe de congélation.

L'invention propose à cet effet un élément de support pour une pluralité de paillettes de conditionnement de semence animale ayant chacune un diamètre prédéterminé et une longueur prédéterminée, l'élément de support comportant une platine et deux joues liées rigidement à ladite platine, laquelle a une largeur inférieure à ladite longueur prédéterminée et comportant une surface cannelée présentant une pluralité de gorges semblables chacune orientée dans la direction de la largeur de la platine et chacune délimitée par une surface ayant une courbure selon ledit diamètre prédéterminé, lesdites gorges étant disposées côte à côte selon un pas prédéterminé, lesdites joues étant configurées pour que ledit élément de support puisse être placé sur une surface de réception horizontale avec ladite surface cannelée située en haut de la platine à un niveau prédéterminé au-dessus de ladite surface de réception, grâce à quoi chaque dite gorge peut recevoir une dite paillette dont un tronçon d'extrémité saille de ladite platine de chaque côté, chaque joue comportant une partie centrale ainsi qu'une première partie saillante et une seconde partie saillante s'étendant chacune d'un côté de la partie centrale, dans laquelle la première partie saillante comporte une patte présentant une face d'appui et la seconde partie saillante comporte une autre patte présentant une autre face d'appui, ladite face d'appui et ladite autre face d'appui étant tournées vers le haut quand ledit élément de support est placé sur ladite surface de réception horizontale, avec, suivant la direction de la hauteur, ladite face d'appui qui est plus éloignée de ladite platine que ladite autre face d'appui.

Alors qu'avec l'élément de support connu susmentionné les parties saillantes des joues reçoivent la base de la rampe de congélation au même niveau de chaque côté avec les deux dentures qui se trouvent sous la surface cannelée tandis que le sommet du rebord périphérique de la rampe de congélation est au même niveau que la platine, l'élément de support selon l'invention reçoit la rampe de congélation dans une position différente : les faces d'appui étant à des niveaux différents la rampe de congélation est inclinée, ce qui permet de placer l'un des rebords périphériques entièrement sous la platine et donc de dégager l'espace dont dispose l'opérateur pour agencer les paillettes, ce qui facilite considérablement sa tâche.

Selon des caractéristiques avantageuses :
- une encoche est ménagée dans la partie centrale de chaque joue au droit de ladite face d'appui ;
- ladite encoche a une profondeur prédéterminée et ladite face d'appui a une longueur au moins égale à ladite profondeur ;
- ladite autre face d'appui a une longueur au moins égale à ladite profondeur ;
- la platine comporte entre soixante-dix et deux cent cinq gorges ;

L'invention vise également un ensemble comportant un élément de support tel qu'exposé ci-dessus et une rampe de congélation de ladite pluralité de paillettes comportant deux parois dentées longeant un espace libre central, ledit élément de support et ladite rampe de congélation étant configurés pour que ledit élément de support puisse s'insérer dans ledit espace libre central, chaque paroi dentée présentant une denture à son sommet comportant une succession de dents et de creux, les dentures desdites parois dentées étant identiques avec chaque creux délimité par une surface ayant une courbure selon ledit diamètre prédéterminé, le pas des dentures étant identique au pas prédéterminé desdites gorges de ladite platine, l'espace libre central de la rampe de congélation étant configuré pour recevoir ladite platine et une partie centrale de chacune des joues de l'élément de support, chaque joue comportant, outre sa partie centrale, deux parties saillantes respectivement une première partie saillante et une seconde partie saillante, s'étendant de chaque côté de ladite partie centrale et étant configurées pour recevoir la rampe de congélation, dans laquelle ladite première partie saillante comporte une patte présentant une face d'appui et ladite seconde partie saillante comporte une autre patte présentant une autre face d'appui, ladite face d'appui et ladite autre face d'appui étant tournées vers le haut quand ledit élément de support est placé sur ladite surface de réception horizontale, avec, suivant la direction de la hauteur, ladite face d'appui qui est plus éloignée de ladite platine que ladite autre face d'appui, de sorte que la rampe de congélation disposée sur l'élément de support soit inclinée.

Selon des caractéristiques avantageuses :
- la rampe de congélation et l'élément de support sont configurés pour adopter une position relative de mise en place des paillettes et une position d'alignement des paillettes, une encoche étant ménagée dans chacune des joues au droit de la face d'appui ;
- l'encoche présente une profondeur prédéterminée correspondant au moins à la distance entre l'une des parois dentées et une paroi longitudinale de la rampe, dans ladite position relative de mise en place des paillettes ladite paroi dentée est configurée pour venir en butée contre une face de fond de ladite encoche maintenant à distance l'autre paroi dentée de la platine, et dans ladite position d'alignement des paillettes une autre paroi longitudinale est configurée pour venir au contact des paillettes ;

- ladite rampe de congélation comporte une paroi de fond en forme de cadre entourant l'espace libre central, ladite paroi de fond étant configurée pour relier lesdites parois dentées aux parois longitudinales ; et/ou
- l'autre face d'appui est prévue pour recevoir l'une des zones de la rampe de congélation située à la jonction de la paroi de fond et de l'une des parois dentées.

### Brève description des dessins

L'exposé de l'invention sera maintenant poursuivi par la description détaillée d'exemples de réalisation, donnée ci-après à titre illustratif et non limitatif, en référence aux dessins annexés, sur lesquels :
[Fig. 1] la figure 1 est une vue en coupe longitudinale d'une paillette conventionnelle remplie et obturée ;
[Fig. 2] la figure 2 est une vue en perspective d'une rampe de congélation prévue pour recevoir une pluralité de paillettes telles que celle illustrée sur la figure 1 et pour être alors placée dans un congélateur ;
[Fig. 3] la figure 3 est une vue de face de cette rampe de congélation ;
[Fig. 4] la figure 4 est une vue semblable à la figure 3 mais montrant plusieurs rampes de congélation semblables empilées les unes sur les autres ;
[Fig. 5] la figure 5 est une vue en perspective d'un élément de support prévu pour faciliter la mise en place des paillettes sur la rampe de congélation montrée sur les figures 2 et 3 ;
[Fig. 6] la figure 6 est une vue en perspective de l'élément de support et de la rampe de congélation dans une position relative de mise en place des paillettes sur la platine de l'élément de support ;
[Fig. 7] la figure 7 est une vue en élévation-coupe de la rampe de congélation et de l'élément de support dans la même position que sur la figure 6 après que des paillettes ont été mises en place sur la platine de l'élément de support ;
[Fig. 8] la figure 8 est une vue semblable à la figure 7 mais avec la rampe de congélation et l'élément de support qui sont dans une position relative d'alignement longitudinal des paillettes mises en place sur la platine de l'élément de support ;
[Fig. 9] la figure 9 est une vue en perspective de l'élément de support, de la rampe de congélation et des paillettes dans la position de la figure 8 ;
[Fig. 10] la figure 10 est une vue semblable à la figure 9 mais avec les paillettes mises en place sur la rampe de congélation, le transfert des paillettes entre l'élément de support et la rampe de congélation ayant été effectué par soulèvement de la rampe de congélation à partir de la position montrée sur les figures 8 et 9 ;
[Fig. 11] la figure 11 est une vue en élévation-coupe d'une portion de la rampe de congélation avant que les paillettes aient été mises en place ; et
[Fig. 12] la figure 12 est une vue semblable à la figure 11 mais avec les paillettes mises en place.

### Description détaillée

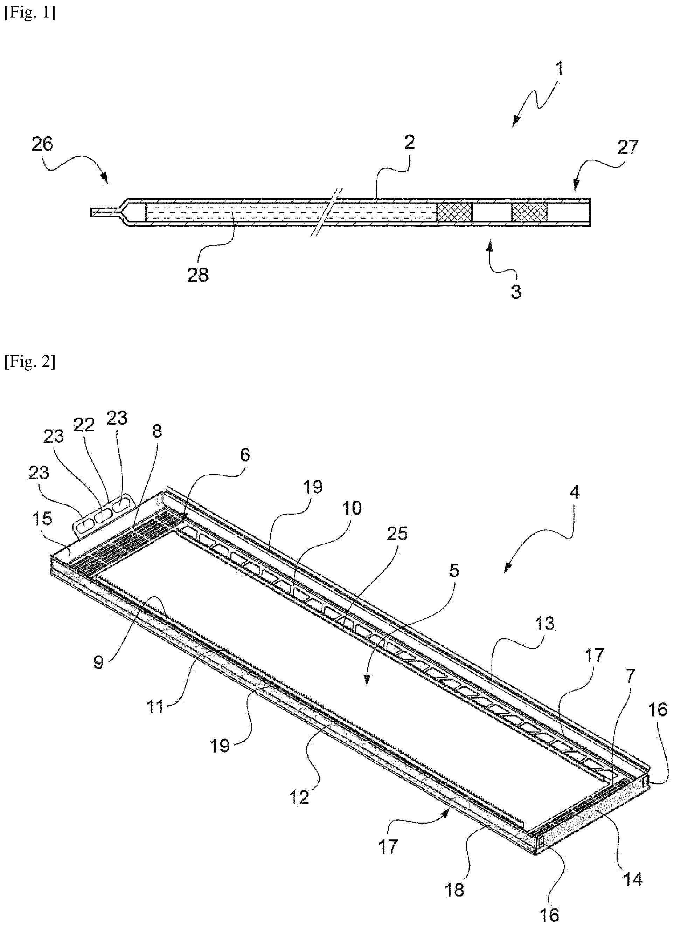

La figure 1 montre, à l'état rempli et obturé, une paillette 1 de conditionnement de semence animale formée par un tube mince 2 en matière plastique et par un bouchon 3 engagé dans le tube 2, la paillette 1 contenant une dose 28 de semence animale diluée, ici de la semence de taureau, disposée entre le bouchon 3 et un tronçon d'extrémité 26 obturé par écrasement et soudage.

Le tronçon d'extrémité 26 est le plus éloigné du bouchon 3. Le tronçon d'extrémité 27, qui est le plus proche du bouchon, n'est ici pas obturé (de ce côté, c'est le bouchon 3 qui retient la dose 28 de semence).

La paillette 1, et plus précisément le tube 2, a une longueur de l'ordre de 133 mm et un diamètre interne qui est de l'ordre de 1,6 mm avec une épaisseur de paroi de l'ordre de 0,175 mm de sorte que le diamètre de la paillette 1, et plus précisément le diamètre externe du tube 2, est de l'ordre de 1,95 mm.

En pratique, vu les tolérances de fabrication, le diamètre externe du tube 2 de la paillette 1 est compris entre 1,90 et 2 mm et sa longueur est comprise entre 132 et 134 mm.

La dose de semence 28 contenue dans la paillette 1 est une dose de semence fraiche qu'il est prévu de conserver par immersion de la paillette 1 dans un bain d'azote liquide.

Avant cette immersion, il convient de congeler la paillette 1 en la plaçant dans un congélateur où circule un flux de vapeur d'azote liquide.

En pratique, on dispose une pluralité de paillettes 1 sur un rack appelé rampe de congélation puis la rampe de congélation portant les paillettes est introduite dans le congélateur. En général, le congélateur est dimensionné pour recevoir plusieurs rampes de congélation superposées.

Les figures 2 à 4 montrent une rampe de congélation spécialement conçue pour coopérer avec des accessoires prévus pour faciliter la manipulation des paillettes.

Ici, la rampe de congélation 4 est faite à partir d'une tôle métallique découpée et pliée.

La rampe de congélation 4 a la forme générale d'un plateau présentant un rebord et un fond entourant un espace libre central 5.

Le fond comporte une paroi de fond 6 en forme de cadre rectangulaire entourant l'espace libre central 5. La paroi de fond 6 est ajourée de manière à permettre la circulation de la vapeur d'azote liquide dans le congélateur.

La paroi de fond 6 comporte deux tronçons transversaux 7 et 8 et deux tronçons longitudinaux 9 et 10. Les tronçons transversaux 7, 8 sont en regard l'un de l'autre et relient les tronçons longitudinaux 9, 10 en regard l'un de l'autre.

Dans le fond de la rampe de congélation 4, les tronçons longitudinaux 9, 10 sont bordés intérieurement chacun par une paroi dentée 11, 25 s'étendant transversalement à la paroi de fond 6.

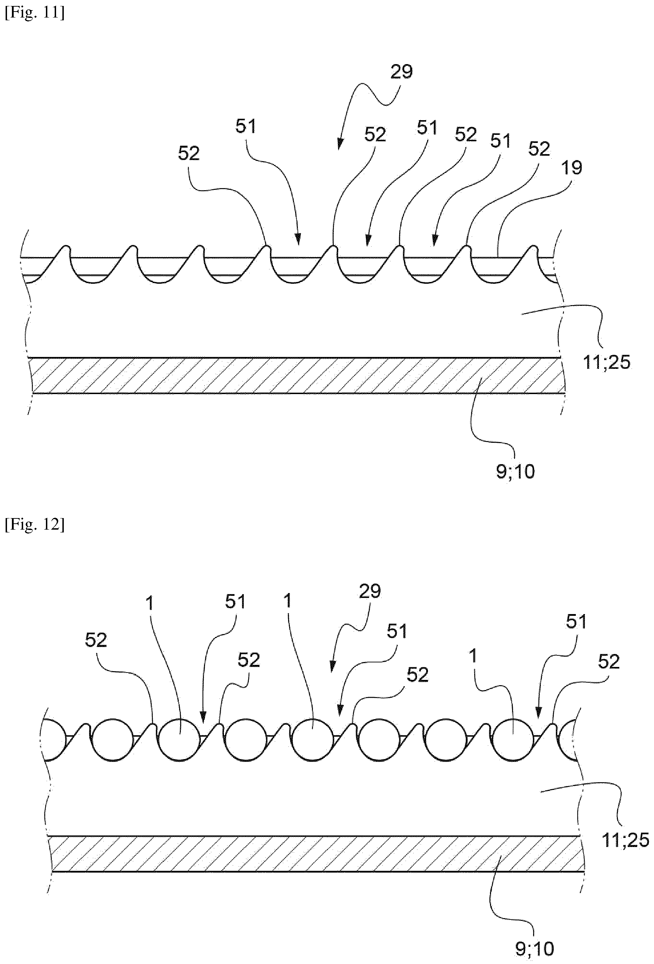

Le sommet de chacune des parois dentées 11, 25 présente une denture 29 comportant une succession de dents 52 et de creux 51, chaque creux 51 étant configuré pour loger un tronçon d'extrémité 26, 27 d'une paillette 1, comme illustré sur les figures 11 et 12.

Chaque creux 51 de la denture 29 de la paroi dentée 11 est en regard d'un creux 51 de la denture 29 de la paroi dentée 25 et chaque creux 51 est délimité par une surface ayant une courbure selon le diamètre des paillettes. Le pas de la denture 29 de la paroi dentée 11 est identique au pas de la denture 29 de la paroi dentée 25.

Ainsi, chaque creux 51 de la denture 29 de la paroi dentée 11 permet de loger un tronçon d'extrémité 26 et chaque creux 51 en regard de la paroi dentée 25 permet de loger un tronçon d'extrémité 27.

Le rebord de la rampe de congélation 4 comporte deux parois longitudinales 12, 13 disposées en regard l'une de l'autre, reliées par deux parois transversales 14 et 15 en regard l'une de l'autre. Les parois transversales 14, 15 s'étendent depuis les tronçons transversaux 7, 8 de la paroi de fond 6 et les parois longitudinales 12 et 13 s'étendent depuis les tronçons longitudinaux 9 et 10 de la paroi de fond 6.

Les parois transversales 14, 15 et les parois longitudinales 12, 13 s'étendent transversalement à la paroi de fond 6 de la rampe de congélation 4.

De plus, une portion de paroi 16 saille de part et d'autre de chacune des parois longitudinales 12, 13. Ces portions de parois 16 sont pliées vers les parois transversales 14, 15, puis soudées à ces parois, afin de maintenir en position les parois longitudinales 12, 13 contre les parois transversales 14, 15 permettant alors de rigidifier la rampe de congélation 4.

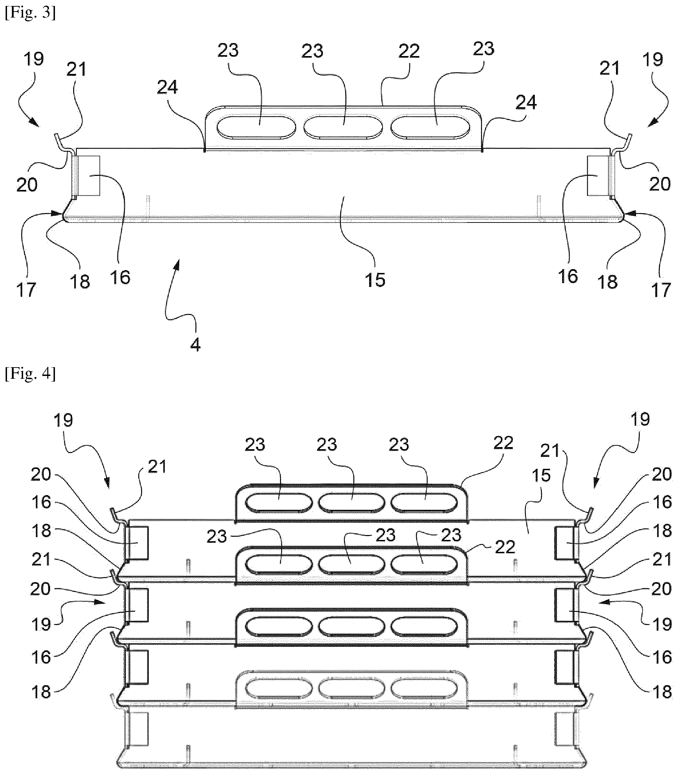

Comme on le voit bien sur la figure 3, la base 17 des parois longitudinales 13, 14, reliée aux tronçons longitudinaux 9, 10, forme un renflement 18.

Une cornière 19 saille de chaque paroi longitudinale 12, 13. Chaque cornière 19 comporte une aile 20 s'étendant transversalement aux parois longitudinales 12, 13 ainsi qu'une aile 21 inclinée s'étendant de l'aile 20 vers l'extérieur et vers le haut de la rampe de congélation 4.

La rampe de congélation 4 est empilable avec une autre rampe de congélation semblable, tel que cela est illustré à la figure 4. Chaque renflement 18 d'une rampe de congélation disposée au-dessus d'une autre rampe de congélation est alors logé dans la cornière 19 correspondante de l'autre rampe de congélation disposée en-dessous.

Plus précisément, chaque renflement 18 de la rampe de congélation prend appui sur l'aile 20 de la rampe de congélation du dessous et entre en butée contre l'aile 21.

Lors de l'empilement de plusieurs rampes de congélation 4, les cornières 19 d'une rampe permettent le maintien latéral de la rampe disposée au-dessus.

Au surplus, la rampe de congélation 4 est pourvue de deux pattes de préhension 22 émergeants chacune d'une paroi transversale 14, 15, vers l'extérieur et vers le haut de la rampe de congélation 4. Les pattes de préhension 22 sont chacune pourvues de trous 23 permettant à l'utilisateur de manipuler la rampe de congélation 4 en limitant les risques de glissement des doigts vis-à-vis des pattes 22.

Chaque patte de préhension 22 est disposée à équidistance des parois longitudinales 12, 13.

Lors de l'empilement d'une rampe de congélation 4 sur une autre rampe de congélation similaire, chaque patte de préhension 22 de la rampe du dessous maintient la rampe du dessus suivant la direction longitudinale.

En outre, des fentes 24 sont ménagées dans les parois transversales 14, 15 de part et d'autre de chacune des pattes de préhension 22.

Comme indiqué ci-dessus, la rampe de congélation 4 a été spécialement conçue pour coopérer avec des accessoires prévus pour faciliter la manipulation des paillettes.

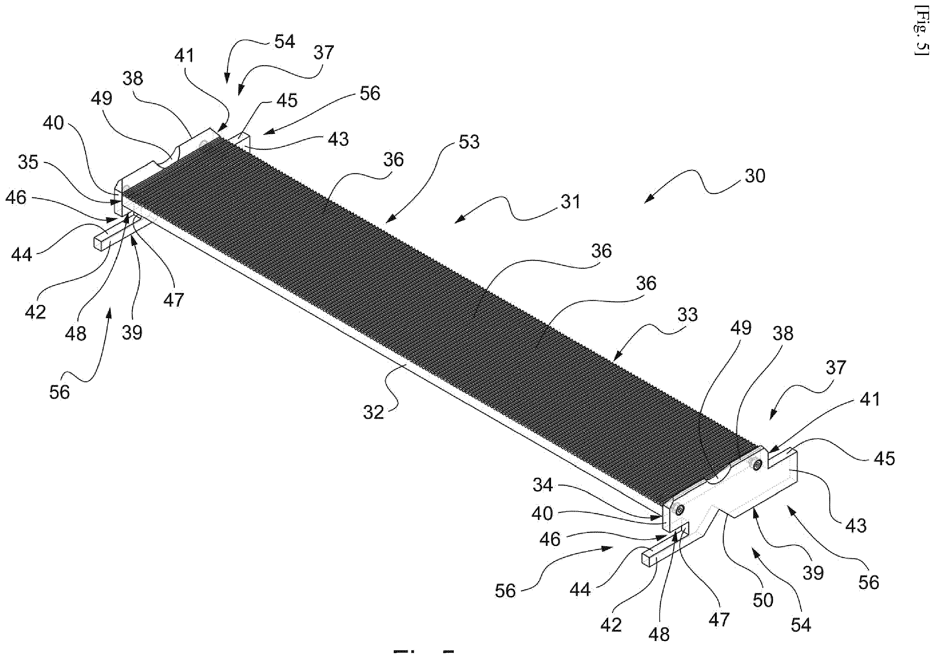

On va maintenant décrire un accessoire pour faciliter la mise en place de la pluralité de paillettes 1 sur la rampe de congélation 4, à savoir un élément de support 30 montré sur la figure 5.

L'élément de support 30 est configuré pour être posé sur une surface de réception horizontale telle qu'une table par exemple.

L'élément de support 30 présente une platine 31 et deux joues 37.

La platine 31 est à contour rectangulaire. Elle est délimitée par deux faces longitudinales 32, 33, deux faces transversales 34, 35, une face supérieure et une face inférieure.

La face supérieure de la platine 31 forme une surface cannelée 53 présentant une pluralité de gorges 36 semblables ménagées côte à côte selon un pas prédéterminé.

Chaque gorge 36 est configurée pour recevoir une paillette 1 du fait qu'elle est délimitée par une surface ayant une courbure selon le diamètre d'une paillette 1.

Chaque gorge 36 est orientée suivant la direction de la largeur de la platine 31, c'est-à-dire suivant la direction transversale.

Les gorges 36 sont disposées sur toute la largeur de la face supérieure de la platine 31, c'est-à-dire de la face longitudinale 32 à la face longitudinale 33.

Dans l'exemple illustré, la platine 31 comporte cent soixante-quinze gorges 6 et peut donc accueillir cent soixante-quinze paillettes 1.

D'une façon générale, il est avantageux que la platine 31 comporte entre soixante-dix et deux cent cinq gorges semblables configurées pour loger le même nombre de paillettes 1.

La platine 31 a une largeur inférieure à la longueur des paillettes 1, à savoir 133 mm, de sorte que quand une paillette 1 est placée centrée ou à peu près dans une gorge 36, ses tronçons d'extrémités 26 et 27 dépassent de part et d'autre de la platine 31.

D'une façon générale, il est avantageux que la platine 31 ait une largeur comprise entre 80 et 90 mm.

Les joues 37 de l'élément de support 30 sont identiques.

Elles sont liées rigidement à la platine 31, ici à chaque extrémité transversale. La liaison rigide est effectuée ici par vissage.

Chaque joue 37 comporte une partie centrale 54 et deux parties saillantes 56.

La partie centrale 54 est de forme générale rectangulaire et est délimitée par une surface supérieure 38, une surface inférieure 39 et deux surfaces latérales 40 et 41.

La largeur de cette partie centrale 54, c'est-à-dire la distance entre les deux surfaces latérales 40, 41 correspond à la largeur de la platine 31.

La surface inférieure 39 de chacune des joues 37 prend appui sur la surface de réception telle qu'une table. La fixation de chacune des joues 37 sur la platine 31 est faite au voisinage de la surface supérieure 38 de chaque joue 37.

Ainsi, la platine 31 s'étend au-dessus et parallèlement à la surface de réception horizontale sur laquelle repose les joues 37 de l'élément de support 30.

La platine 31 et la partie centrale 54 de chacune des joues 37 sont configurées pour se loger dans l'espace libre central 5 de la rampe de congélation 4, entre les parois dentées 11 et 25. Les parties saillantes 56 s'étendent de part et d'autre de la partie centrale 54 des joues 37. Plus précisément, chaque partie saillante 56 émerge d'une des surfaces latérales 40, 41.

La première partie saillante 56 comporte une patte 42 en débord de la surface latérale 40 à la base de la joue 37, avec ici la face inférieure de la patte 42 qui fait partie de la surface inférieure 39 de la joue 37.

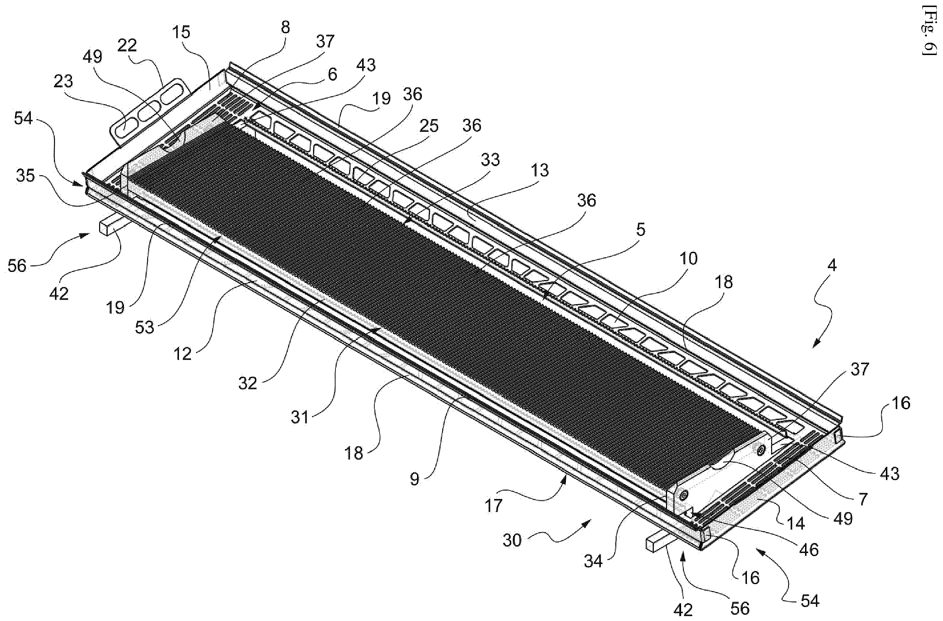

La face supérieure de la patte 42 forme une face d'appui 44 prévue pour recevoir l'une des zones de la rampe de congélation 4 située à la jonction de la paroi de fond 6 et du rebord, en l'occurrence le renflement 18 en regard de la paroi dentée 11, comme on le voit sur les figures 6 à 8.

La seconde partie saillante 56 comporte une patte 43 en débord de la surface latérale 41, à la base de la joue 37 avec ici la face inférieure de la patte 43 qui fait partie de la surface inférieure 39 de la joue 37.

La face supérieure de la patte 43 forme une face d'appui 45 prévue pour recevoir l'une des zones de la rampe de congélation 4 située à la jonction de la paroi de fond 6 et de l'une des parois dentées 11, 25, ici la paroi dentée 25, comme on le voit sur les figures 6 à 8.

Suivant la direction de la hauteur, la face d'appui 44 de chaque patte 42 est plus éloignée de la platine 31 que la face d'appui 45 de chaque patte 43. Ainsi, lorsqu'elle est mise en place sur l'élément de support 30, la rampe de congélation 4 est inclinée.

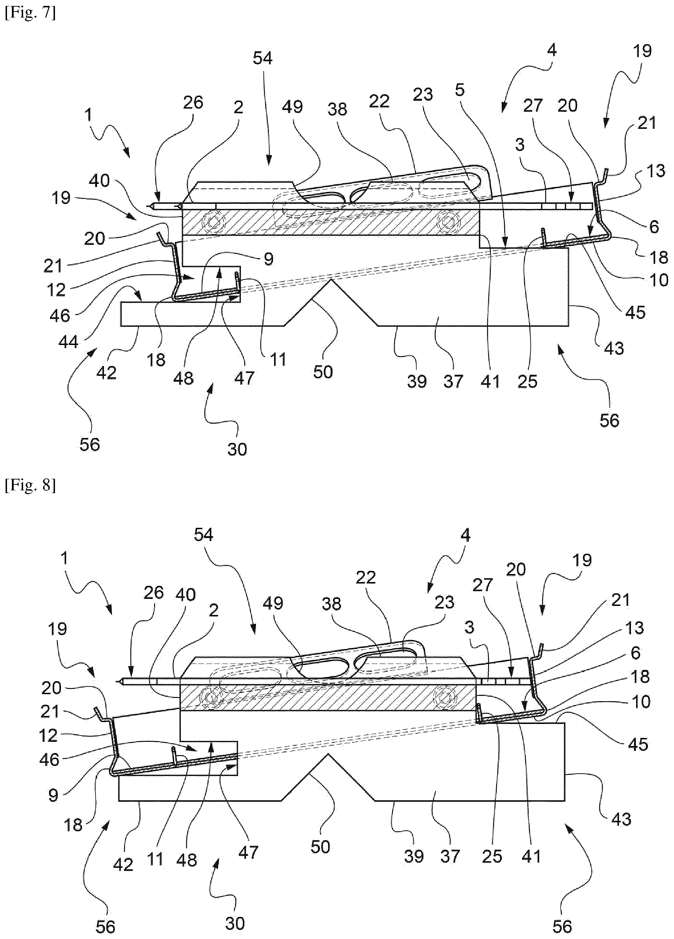

Cette inclinaison est telle (voir les figures 7 et 8) que la paroi longitudinale 13 est au même niveau que la surface supérieure de la platine 31 alors que la paroi longitudinale 12 est en-dessous de la surface supérieure de la platine 31.

Une encoche 46 est ménagée dans chaque joue 37 en retrait de la surface latérale 40.

L'encoche 46 est délimitée par une face d'appui située dans le prolongement de la face d'appui 44 de la patte 42, une face de fond 47 et une face supérieure 48. Pour chaque joue 37, la face supérieure 48 est en regard de la face d'appui 44 et la face de fond est transversale à la face d'appui 44 et à la face supérieure 48.

Chaque encoche 46 est configurée pour loger un des tronçons longitudinaux 9 ou 10 (le tronçon 9 sur les figures 5 à 9) et la paroi dentée 11 ou 25 (la paroi dentée 11 sur les figures 5 à 9).

La profondeur de l'encoche 46 est prédéterminée et correspond ici à la distance entre la paroi dentée 11 et la paroi longitudinale 12 ainsi qu'à la distance entre la paroi dentée 25 et la paroi longitudinale 13 (ici les distances entre les parois dentées 11, 25 et respectivement les parois longitudinales 12, 13 sont égales).

Dans la position relative de mise en place des paillettes 1 sur la platine 31 montrée sur les figure 6 et 7, la rampe de congélation 4 est reçue sur l'élément de support 30 avec la paroi dentée 11 en butée contre la face de fond 47 de l'encoche 46.

Dans cette position, selon la direction transversale (direction de la largeur) de la platine 31, la paroi longitudinale 13 est à distance de la platine 31 tandis que la paroi longitudinale 12 en est proche mais comme elle est située en-dessous de la surface supérieure de la platine 31, elle ne gêne pas l'accès à cette surface supérieure, qui est plus généralement facile d'accès puisque la paroi latérale 13 est à distance de la platine 31.

L'utilisateur peut alors aisément étaler la pluralité de paillettes 1 sur la surface supérieure cannelée 53 de la platine 31, en veillant à centrer grossièrement les paillettes par rapport à la platine 31.

On observera que dans la position relative de mise en place des paillettes 1 sur la platine 31 montrée sur les figure 6 et 7, la distance entre la surface latérale 41 et la paroi dentée 25 est plus grande que la profondeur de l'encoche 46.

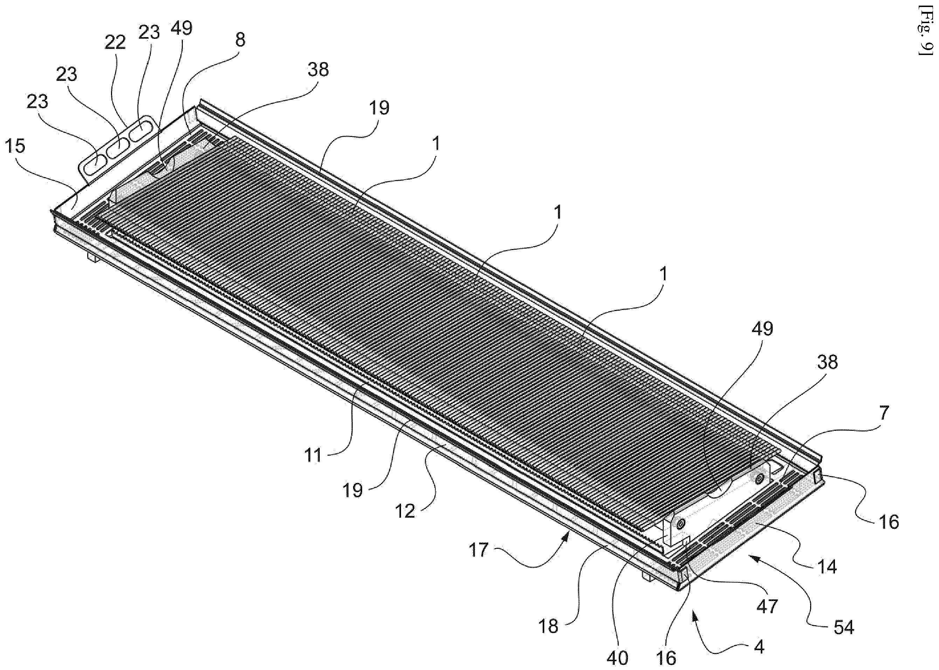

Par conséquent si l'on fait glisser la rampe de congélation 4 sur les faces d'appui 44 et 45 dans le sens qui fait sortir la paroi dentée 11 de l'encoche 46 (vers la gauche sur la figure 7), la paroi dentée 11 est hors de l'encoche 46 lorsque la paroi dentée 25 vient contre la surface latérale 41, ainsi que montré sur les figures 8 et 9.

On est alors dans une position d'alignement longitudinal des paillettes, par venue en contact de celles-ci contre la paroi longitudinale 13.

Pour une partie des paillettes, cet alignement est effectué lors du mouvement de la rampe de congélation 4 depuis la position relative de mise en place des paillettes, puisque lors de ce mouvement la paroi longitudinale 13 est venue au contact des paillettes qui dépassaient trop de son côté puis est restée en contact avec elles en les poussant. Pour les autres paillettes (celles qui dépassent trop du côté opposé à la paroi longitudinale 13), l'utilisateur les pousse à la main pour qu'elles viennent aussi contre la paroi 13. Toutes les paillettes sont alors alignées, puisqu'elles ont chacune une extrémité le long de la paroi 13, ainsi qu'on le voit bien sur la figure 9.

La paroi dentée 11, qui est hors de l'encoche 46, est en regard des tronçons d'extrémité 26 des paillettes 1 tandis que la paroi dentée 25 est en regard de leurs tronçons d'extrémité 27.

Plus précisément, la rampe de congélation 4 et l'élément de support 30 sont configurés, en particulier du fait que le pas de la denture 29 des parois 11 et 25 est le même que le pas de la surface cannelée 53 de l'élément de support 30, pour que chaque creux 51 de la denture 29 de la paroi dentée 11 soit en regard du tronçon d'extrémité 26 d'une paillette 1 et que chaque creux 51 de la denture 29 de la paroi dentée 25 soit en regard du tronçon d'extrémité 27 d'une paillette 1.

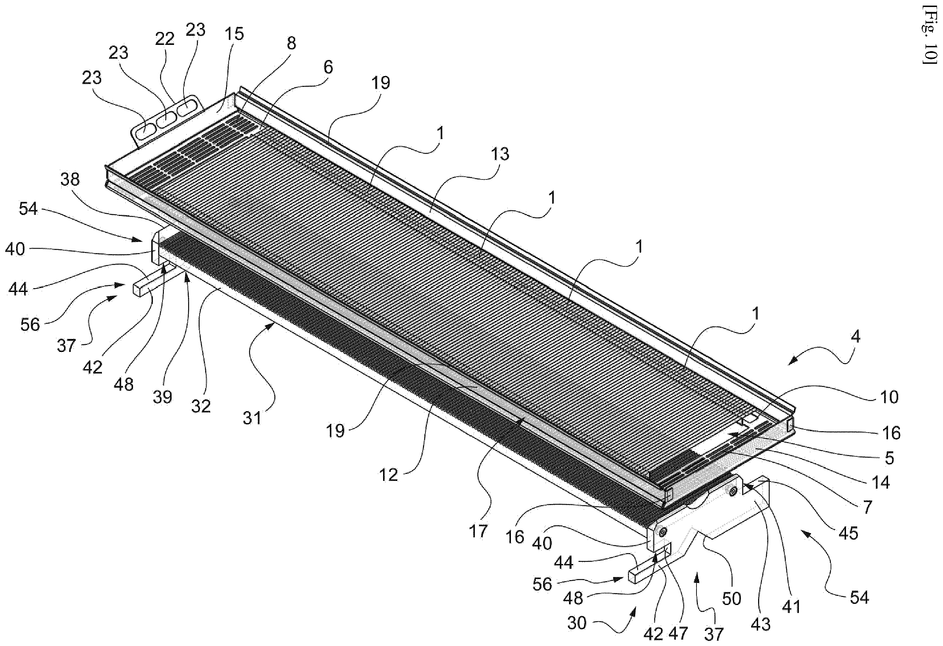

Ainsi, il suffit à l'utilisateur de soulever la rampe de congélation 4 pour que chaque tronçon d'extrémité 26, 27 des paillettes se loge dans un creux 51 de denture 29 des parois dentées 11, 25, les paillettes 1 étant ainsi mises en place sur la rampe de congélation 4, ainsi qu'on le voit sur la figure 10.

La figure 10 montre une portion de paroi dentée 11, 25 avant le soulèvement de la rampe 4, lorsque les paillettes 1 sont disposées sur la platine 31 et la figure 11 montre cette même portion de paroi dentée 11, 25 après le soulèvement de la rampe 4, lorsque les paillettes 1 sont mises en place dans la denture 29.

On notera que pour simplifier les dessins, seule l'une des pattes de préhension 22 de la rampe 4 est illustrée sur les figures 9 et 10.

On observera que chaque joue 37 comporte ici une alvéole 49 ménagée dans la surface supérieure 38 jusqu'à la platine 31. Chacune de ces alvéoles 49 présente une longueur et une largeur permettant d'y insérer le doigt d'une main d'adulte.

Chaque alvéole 49, disposée à mi-distance des faces longitudinales 32, 33 de la platine 31, facilite l'étalage de la pluralité de paillettes 1 sur la surface cannelée 53 de la platine 31 puisqu'elle permet à l'utilisateur d'y disposer son doigt lorsqu'il dépose en vrac la pluralité de paillettes dans la pluralité de gorges 36 de la platine 31 au voisinage de chaque joue 37.

Chacune des joues 37 comporte également une cavité 50 ménagée dans la surface inférieure 39 à mi-distance de chacune des faces longitudinales 32, 33, de la platine 31. Chaque cavité 50 présente une longueur et une largeur permettant d'y insérer le doigt d'une main d'adulte.

L'utilisateur peut transporter l'élément de support par pincement des joues 37, en disposant un doigt dans chaque alvéole 49 et un autre doigt dans chaque cavité 50.

On va maintenant récapituler les actions effectuées par l'utilisateur pour mettre en place les paillettes 1 sur la rampe de congélation 4.

Tout d'abord, la rampe de congélation 4 est disposée sur l'élément de support 30.

Plus précisément, la platine 31 et la partie centrale de chacune des joues 37 sont insérées dans l'espace libre central 5 de la rampe de congélation 4, avec l'élément de support 30 et la rampe de congélation 4 disposés dans la position de mise en place des paillettes 1 sur la platine 31 (figures 6 et 7).

L'utilisateur place ensuite sur la surface cannelée 53 de la platine 31 la pluralité de paillettes en vrac. En les étalant sur la surface, chaque paillette 1 s'insère dans une gorge 36 de la platine 31, l'utilisateur veillant à centrer grossièrement les paillettes 1 vis-à-vis de la platine 31.

Une fois les paillettes 1 placées dans les gorges 36, l'utilisateur translate la rampe 4 de sorte à ce qu'elle soit en position d'alignement longitudinal des paillettes (figures 8 et 9).

L'utilisateur saisit alors les pattes de préhension 22 pour soulever la rampe de congélation 4. Les paillettes sont alors mises en place sur la rampe de congélation 4 (figure 10).

On notera que sur les figures 6 à 10 c'est la paroi dentée 11 qui est du côté de l'encoche 46 mais que cela aurait pu être la paroi dentée 25, la partie de la rampe de congélation 4 située d'un côté d'un plan médian longitudinal orienté verticalement étant l'image miroir de la partie située de l'autre côté.

Dans des variantes non illustrées, les dimensions de la platine sont différentes, par exemple pour la mise en oeuvre de paillettes de diamètre différent tel qu'un diamètre interne de 2,5 mm et un diamètre externe de 2,85 mm avec une tolérance de +/- 0,05 mm.

De nombreuses autres variantes sont possibles en fonction des circonstances et l'on rappelle à cet égard que l'invention ne se limite pas aux exemples décrits et représentés, mais l'invention est définie par les revendications.

## Revendications

1. Elément de support pour une pluralité de paillettes (1) de conditionnement de semence animale ayant chacune un diamètre prédéterminé et une longueur prédéterminée, l'élément de support (30) comportant une platine (31) et deux joues (37) liées rigidement à ladite platine (31), laquelle a une largeur inférieure à ladite longueur prédéterminée et comportant une surface cannelée (53) présentant une pluralité de gorges semblables (36) chacune orientée dans la direction de la largeur de la platine (31) et chacune délimitée par une surface ayant une courbure selon ledit diamètre prédéterminé, lesdites gorges (36) étant disposées côte à côte selon un pas prédéterminé, lesdites joues (37) étant configurées pour que ledit élément de support (30) puisse être placé sur une surface de réception horizontale avec ladite surface cannelée (53) située en haut de la platine (31) à un niveau prédéterminé au-dessus de ladite surface de réception, grâce à quoi chaque dite gorge (36) peut recevoir une dite paillette (1) dont un tronçon d'extrémité (26,27) saille de ladite platine (31) de chaque côté, chaque joue (37) comportant une partie centrale ainsi qu'une première partie saillante (42) et une seconde partie saillante (43) s'étendant chacune d'un côté de la partie centrale, **caractérisé en ce que** la première partie saillante comporte une patte (42) présentant une face d'appui (44) et la seconde partie saillante comporte une autre patte (43) présentant une autre face d'appui (45), ladite face d'appui (44) et ladite autre face d'appui (45) étant tournées vers le haut quand ledit élément de support (30) est placé sur ladite surface de réception horizontale, avec, suivant la direction de la hauteur, ladite face d'appui (44) qui est plus éloignée de ladite platine (31) que ladite autre face d'appui (45).

2. Elément de support selon la revendication 1, **caractérisé en ce qu'**une encoche (46) est ménagée dans la partie centrale de chaque joue (37) au droit de ladite face d'appui (44).

3. Elément de support selon la revendication 2, caractérisé en ce ladite encoche (46) a une profondeur prédéterminée et ladite face d'appui (44) a une longueur au moins égale à ladite profondeur.

4. Elément de support selon la revendication 3, **caractérisé en ce que** ladite autre face d'appui (45) a une longueur au moins égale à ladite profondeur.

5. Elément de support selon l'une quelconque des revendications 1 à 4, **caractérisé en ce que** la platine (31) comporte entre soixante-dix et deux cent cinq gorges (36).

6. Ensemble comportant un élément de support (30) selon l'une quelconque des revendications 1 à 5 et une rampe de congélation (4) de ladite pluralité de paillettes (1) comportant deux parois dentées (11, 25) longeant un espace libre central (5), ledit élément de support (30) et ladite rampe de congélation (30) étant configurés pour que ledit élément de support (30) puisse s'insérer dans ledit espace libre central (5), chaque paroi dentée (11, 25) présentant une denture (29) à son sommet comportant une succession de dents (52) et de creux (51), les dentures (29) desdites parois dentées (11, 25) étant identiques avec chaque creux (51) délimité par une surface ayant une courbure selon ledit diamètre prédéterminé, le pas des dentures (29) étant identique au pas prédéterminé desdites gorges (36) de ladite platine (31), l'espace libre central (5) de la rampe de congélation (4) étant configuré pour recevoir ladite platine (31) et une partie centrale de chacune des joues (37) de l'élément de support (30), chaque joue (37) comportant, outre sa partie centrale, deux parties saillantes respectivement une première partie saillante (42) et une seconde partie saillante (43), s'étendant de chaque côté de ladite partie centrale et étant configurées pour recevoir la rampe de congélation (4), **caractérisé en ce que** ladite première partie saillante comporte une patte (42) présentant une face d'appui (44) et ladite seconde partie saillante comporte une autre patte (43) présentant une autre face d'appui (45), ladite face d'appui (44) et ladite autre face d'appui (45) étant tournées vers le haut quand ledit élément de support (30) est placé sur ladite surface de réception horizontale, avec, suivant la direction de la hauteur, ladite face d'appui (44) qui est plus éloignée de ladite platine (31) que ladite autre face d'appui (45), de sorte que la rampe de congélation (4) disposée sur l'élément de support (30) soit inclinée.

7. Ensemble selon la revendication 6, **caractérisé en ce que** la rampe de congélation (4) et l'élément de support (30) sont configurés pour adopter une position relative de mise en place des paillettes et une position d'alignement des paillettes, une encoche (46) étant ménagée dans chacune des joues (37) au droit de la face d'appui (44).

8. Ensemble selon la revendication 7, **caractérisé en ce que** l'encoche (46) présente une profondeur prédéterminée correspondant au moins à la distance entre l'une des parois dentées (11, 25) et une paroi longitudinale (12, 13) de la rampe (4), dans ladite position relative de mise en place des paillettes ladite paroi dentée (11, 25) est configurée pour venir en butée contre une face de fond (47) de ladite encoche (46) maintenant à distance l'autre paroi dentée (11, 25) de la platine (31), et dans ladite position d'alignement des paillettes une autre paroi longitudinale (12, 13) est configurée pour venir au contact des paillettes.

9. Ensemble selon la revendication 8, **caractérisé en ce que** ladite rampe de congélation (4) comporte une paroi de fond (6) en forme de cadre entourant l'espace libre central (5), ladite paroi de fond (6) étant configurée pour relier lesdites parois dentées (11, 25) aux parois longitudinales (12, 13).

10. Ensemble selon la revendication 9, **caractérisé en ce que** l'autre face d'appui (45) est prévue pour recevoir l'une des zones de la rampe de congélation (4) située à la jonction de la paroi de fond (6) et de l'une des parois dentées (11, 25).

## Patentansprüche

1. Trägerelement für eine Vielzahl von Tiersamen-Verpackungsröhrchen (1), die jeweils einen vorbestimmten Durchmesser und eine vorbestimmte Länge aufweisen, wobei das Trägerelement (30) eine Platte (31) und zwei Wangen (37) umfasst, die starr mit der Platte (31) verbunden sind, welche eine Breite aufweist, die kleiner ist als die vorbestimmte Länge, und eine geriffelte Fläche (53) umfasst, die eine Vielzahl von ähnlichen Rillen (36) aufweist, die jeweils in der Richtung der Breite der Platte (31) ausgerichtet sind und jeweils von einer Fläche mit einer Krümmung gemäß dem vorbestimmten Durchmesser begrenzt werden, wobei die Rillen (36) gemäß einer vorbestimmten Teilung nebeneinander angeordnet sind, wobei die Wangen (37) so ausgelegt sind, dass das Trägerelement (30) auf einer horizontalen Aufnahmefläche platziert werden kann, wobei sich die geriffelte Fläche (53) an der Oberseite der Platte (31) auf einem vorbestimmten Niveau über der Aufnahmefläche befindet, wodurch jede Rille (36) ein Röhrchen (1) aufnehmen kann, von dem ein Endabschnitt (26, 27) auf jeder Seite von der Platte (31) vorspringt, wobei jede Wange (37) einen Mittelteil sowie einen ersten vorspringenden Teil (42) und einen zweiten vorspringenden Teil (43) umfasst, die sich jeweils auf einer Seite des Mittelteils erstrecken, **dadurch gekennzeichnet, dass** der erste vorspringende Teil eine Nase (42) umfasst, die eine Auflagefläche (44) aufweist, und der zweite vorspringende Teil eine andere Nase (43) umfasst, die eine andere Auflagefläche (45) aufweist, wobei die Auflagefläche (44) und die andere Auflagefläche (45) nach oben gewandt sind, wenn das Trägerelement (30) auf der horizontalen Aufnahmefläche platziert ist, wobei in der Richtung der Höhe die Auflagefläche (44) weiter von der Platte (31) entfernt ist als die andere Auflagefläche (45).

2. Trägerelement nach Anspruch 1, **dadurch gekennzeichnet, dass** im Mittelteil jeder Wange (37) an der Auflagefläche (44) eine Kerbe (46) ausgestaltet ist.

3. Trägerelement nach Anspruch 2, **dadurch gekennzeichnet, dass** die Kerbe (46) eine vorbestimmte Tiefe aufweist, und die Auflagefläche (44) eine Länge aufweist, die mindestens gleich der Tiefe ist.

4. Trägerelement nach Anspruch 3, **dadurch gekennzeichnet, dass** die andere Auflagefläche (45) eine Länge aufweist, die mindestens gleich der Tiefe ist.

5. Trägerelement nach einem der Ansprüche 1 bis 4, **dadurch gekennzeichnet, dass** die Platte (31) zwischen siebzig und zweihundertfünf Rillen (36) umfasst.

6. Anordnung, die ein Trägerelement (30) nach einem der Ansprüche 1 bis 5 und eine Gefrierrampe (4) für die Vielzahl von Röhrchen (1) umfasst, die zwei gezahnte Wände (11, 25) umfasst, die einen freien Mittelraum (5) entlang verlaufen, wobei das Trägerelement (30) und die Gefrierrampe (30) so ausgelegt sind, dass das Trägerelement (30) in den freien Mittelraum (5) eingesetzt werden kann, wobei jede gezahnte Wand (11, 25) an ihrer Oberseite eine Zahnung (29) aufweist, die eine Folge von Zähnen (52) und Vertiefungen (51) umfasst, wobei die Zahnungen (29) der gezahnten Wände (11, 25) gleich sind, wobei jede Vertiefung (51) von einer Fläche mit einer Krümmung gemäß dem vorbestimmten Durchmesser begrenzt wird, wobei die Teilung der Zahnungen (29) mit der vorbestimmten Teilung der Rillen (36) der Platte (31) gleich ist, wobei der freien Mittelraum (5) der Gefrierrampe (4) so ausgelegt ist, dass er die Platte (31) und einen Mittelteil jeder der Wangen (37) des Trägerelements (30) aufnimmt, wobei jede Wange (37) außer ihrem Mittelteil zwei vorspringende Teile, einen ersten vorspringenden Teil (42) bzw. einen zweiten vorspringenden Teil (43) umfasst, die sich auf jeder Seite des Mittelteils erstrecken und so ausgelegt sind, dass sie die Gefrierrampe (4) aufnehmen, **dadurch gekennzeichnet, dass** der erste vorspringende Teil eine Nase (42) umfasst, die eine Auflagefläche (44) aufweist, und der zweite vorspringende Teil eine andere Nase (43) umfasst, die eine andere Auflagefläche (45) aufweist, wobei die Auflagefläche (44) und die andere Auflagefläche (45) nach oben gewandt sind, wenn das Trägerelement (30) auf der horizontalen Aufnahmefläche platziert ist, wobei in der Richtung der Höhe die Auflagefläche (44) weiter von der Platte (31) entfernt ist als die andere Auflagefläche (45), sodass die auf dem Trägerelement (30) angeordnete Gefrierrampe (4) geneigt ist.

7. Anordnung nach Anspruch 6, **dadurch gekennzeichnet, dass** die Gefrierrampe (4) und das Trägerelement (30) so ausgelegt sind, dass sie eine relative Position zum Einsetzen der Röhrchen und eine Position zum Ausrichten der Röhrchen annehmen, wobei in jeder der Wangen (37) an der Auflagefläche (44) eine Kerbe (46) ausgestaltet ist.

8. Anordnung nach Anspruch 7, **dadurch gekennzeichnet, dass** die Kerbe (46) eine vorbestimmte Tiefe aufweist, die mindestens dem Abstand zwischen einer der gezahnten Wände (11, 25) und einer Längswand (12, 13) der Rampe (4) entspricht, in der relativen Position zum Einsetzen der Röhrchen die gezahnte Wand (11, 25) so ausgelegt ist, dass sie an einer Bodenfläche (47) der Kerbe (46) in Anschlag gelangt, wodurch die andere gezahnte Wand (11, 25) in Abstand von der Platte (31) gehalten wird, und eine andere Längswand (12, 13) so ausgelegt ist, dass sie in der Position zum Ausrichten der Röhrchen mit den Röhrchen in Kontakt gelangt.

9. Anordnung nach Anspruch 8, **dadurch gekennzeichnet, dass** die Gefrierrampe (4) eine rahmenförmige Bodenwand (6) umfasst, die den freien Mittelraum (5) umgibt, wobei die Bodenwand (6) so ausgelegt ist, dass sie die gezahnten Wände (11, 25) mit den Längswänden (12, 13) verbindet.

10. Anordnung nach Anspruch 9, **dadurch gekennzeichnet, dass** die andere Auflagefläche (45) dafür vorgesehen ist, eine der Zonen der Gefrierrampe (4) aufzunehmen, die sich am Übergang der Bodenwand (6) und einer der gezahnten Wände (11, 25) befindet.

## Claims

1. Support member for a plurality of straws (1) for packaging animal semen each having a predetermined diameter and a predetermined length, the support member (30) comprising a plate (31) and two flanges (37) rigidly connected to said plate (31), which has a width less than said predetermined length and comprising a fluted surface (53) having a plurality of similar channels (36) each of which is oriented in the direction of the width of the plate (31) and each delimited by a surface having a curvature according to said predetermined diameter, said channels (36) being disposed side by side with a predetermined pitch, said flanges (37) being configured such that said support member (30) can be placed on a horizontal reception surface with said fluted surface (53) located atop the plate (31) at a predetermined level above said reception surface, whereby each said channel (36) can receive a said straw (1) of which an end section (26,27) projects from said plate (31) on each side, each flange (37) comprising a central part as well as a first projecting part (42) and a second projecting part (43) each extending on one side of the central part, **characterized in that** the first projecting part comprises a foot (42) having a bearing face (44) and the second projecting part comprises another foot (43) having another bearing face (45), said bearing face (44) and said other bearing face (45) being turned upward when said support member (30) is placed on said horizontal reception surface, said bearing face (44) being farther from said plate (31) than said other bearing face (45) in the direction of the height.

2. Support member method according to claim 1, **characterized in that** a cut-out (46) is provided in the central part of each flange (37) perpendicular to said bearing face (44).

3. Support member method according to claim 2, **characterized in that** said cut-out (46) has a predetermined depth and said bearing face (44) has a length at least equal to said depth.

4. Support member method according to claim 3, **characterized in that** said other bearing face (45) has a length at least equal to said depth.

5. Support member according to any one of claims 1 to 4, **characterized in that** the plate (31) comprises between seventy and two hundred and five channels (36).

6. Assembly comprising a support member (30) according to any one of claims 1 to 5 and a freezing rack (4) of said plurality of straws (1) comprising two toothed walls (11, 25) extending along a central free space (5), said support member (30) and said freezing rack (30) being configured such that said support member (30) can be inserted into said central free space (5), each toothed wall (11, 25) having a set of toothing (29) at its apex comprising a succession of teeth (52) and hollows (51), the sets of toothing (29) of said toothed walls (11, 25) being identical to each hollow (51) delimited by a surface having a curvature according to said predetermined diameter, the pitch of said sets of toothing (29) being identical to the predetermined pitch of said channels (36) of said plate (31), the central free space (5) of the freezing rack (4) being configured to receive said plate (31) and a central part of each of the flanges (37) of the support member (30), each flange (37) comprising, in addition to its central part, two projecting parts respectively a first projecting part (42) and a second projecting part (43), extending on each side of said central part and being configured to receive the freezing rack (4), **characterized in that** said first projecting part comprises a foot (42) having a bearing face (44) and said second projecting part comprises another foot (43) having another bearing face (45), said bearing face (44) and said other bearing face (45) being turned upward when said support member (30) is placed on said horizontal reception surface, said bearing face (44) being farther from said plate (31) than said other bearing face (45), in the direction of the height, such that the freezing rack (4) disposed on the support member (30) is inclined.

7. Assembly according to claim 6, **characterized in that** the freezing rack (4) and the support member (30) are configured to have a relative position of putting in place the straws and a position of aligning the straws, a cut-out (46) being provided in each of the flanges (37) perpendicular to the bearing face (44).

8. Assembly according to claim 7, **characterized in that** the cut-out (46) has a predetermined depth corresponding to at least the distance between one of the toothed walls (11, 25) and a longitudinal wall (12, 13) of the rack (4), in said relative position of putting in place the straws said toothed wall (11, 25) is configured to come into stopped engagement against a back face (47) of said cut-out (46) holding the other toothed wall (11, 25) at a distance from the plate (31), and in said position of aligning the straws another longitudinal wall (12, 13) is configured to come into contact with the straws;

9. Assembly according to claim 8, **characterized in that** said freezing rack (4) comprises a bottom wall (6) of frame form surrounding the central free space (5), said bottom wall (6) being configured to connect said toothed walls (11, 25) to the longitudinal walls (12, 13).

10. Assembly according to claim 9, **characterized in that** the other bearing face (45) is provided to receive one of the zones of the freezing rack (4) located at the junction of the bottom wall (6) and of one of the toothed walls (11, 25).
